# EUROPEAN PATENT APPLICATION

(11) **EP 4 559 949 A1**
(43) Date of publication of application: **28.05.2025**
(21) Application number: 23842868.4
(22) Date of filing: 10.07.2023
(51) Int. Cl.: C08G 59/30, C09J 11/06, C09J 163/00, C09J 163/02

(54) **EPOXY RESIN COMPOSITION, EPOXY RESIN-CURED PRODUCT, AND EPOXY ADHESIVE**

(30) Priority: 22.07.2022 JP 2022117216
(71) Applicant: SHIN-ETSU CHEMICAL CO., LTD., Tokyo 1000005 (JP); The School Corporation Kansai University, Suita-shi, Osaka 564-8680 (JP)
(72) Inventor: NODA Daisuke, Annaka-shi, Gunma 379-0224 (JP); NAKAGAWA Hideo, Tokyo 100-0005 (JP); IRIFUNE Shinji, Annaka-shi, Gunma 379-0224 (JP); HARADA Miyuki, Suita-shi, Osaka 564-8680 (JP)
(74) Representative: Sonnenhauser, Thomas Martin
(86) International application number: PCT/JP2023/025455
(87) International publication number: WO 2024/018943

(57) **Abstract**

The present invention is an epoxy resin composition including (A) an epoxy resin containing two or more epoxide groups in one molecule, (B) a polyorganosiloxane compound represented by the following general formula (1), and (C) an epoxy resin curing agent, wherein the epoxy resin composition includes 1 to 40 parts by mass of the component (B) relative to 100 parts by mass of the component (A). Thus, the present invention provides: an epoxy resin composition configured to exhibit a property of increasing both an elongation property and tensile shear strength; a cured material thereof; and an epoxy adhesive.

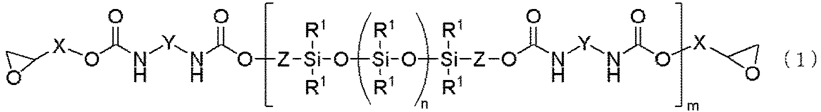

## Description

### TECHNICAL FIELD

The present invention relates to an epoxy resin composition, a cured material thereof, and an epoxy adhesive.

### BACKGROUND ART

In recent years, along with an ongoing shift from conventional engine vehicles to electric vehicles, there are big changes in how to make automobile structures. Furthermore, regarding materials to be bonded, there are growing needs for not only similar material bonding but also dissimilar material bonding, such as iron and Al, Al and a steel plate, and Al and CFRP, to reduce vehicle weight. Epoxy adhesives are mainly used as body shell adhesives for such dissimilar material bonding to increase rigidity of automobiles. Epoxy adhesives are excellent in mechanical strength, electrical insulation, heat resistance, chemical resistance, water resistance, low shrinkage, and adhesion, and therefore play a major role as adhesives for bonding automobiles.

However, even epoxy adhesives that can achieve high adhesive strength have a problem of low toughness. In other words, they have a problem of low impact peel strength. To solve this problem, there is an ongoing development of epoxy adhesives containing polyurethane polymers with an epoxide group at its end as an impact resistance improver, as described in Patent Document 1.

### CITATION LIST

### PATENT LITERATURE

Patent Document 1: JP 2010-521570 A

### SUMMARY OF INVENTION

### TECHNICAL PROBLEM

However, in epoxy adhesives having the above-described structure, there has been a problem of great difficulty in increasing both an elongation property and tensile shear strength by mixing urethane polymers. Furthermore, it is necessary for dissimilar material bonding to enhance both the elongation property and the tensile shear strength.

In view of the above-mentioned problems, the present invention aims to provide: an epoxy resin composition configured to exhibit a property of increasing both an elongation property and tensile shear strength; a cured material thereof; and an epoxy adhesive.

### SOLUTION TO PROBLEM

To solve the above-mentioned problems, the present invention provides an epoxy resin composition including (A) an epoxy resin containing two or more epoxide groups in one molecule, (B) a polyorganosiloxane compound represented by the following general formula (1), and (C) an epoxy resin curing agent, wherein the epoxy resin composition includes 1 to 40 parts by mass of the component (B) relative to 100 parts by mass of the component (A),

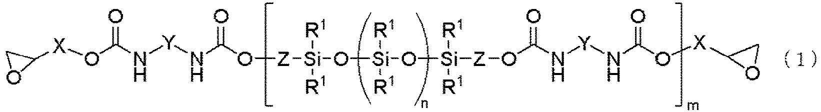

in the general formula (1), R¹ each independently represents a group selected from an alkyl group having 1 to 12 carbon atoms, an aryl group having 6 to 12 carbon atoms, and an aralkyl group having 7 to 12 carbon atoms or a hydroxy group; X each independently represents a divalent alkylene group having 1 to 10 carbon atoms; Y each independently represents a group selected from an alkylene group having 5 to 30 carbon atoms and optionally having an ether bond, an arylene group having 6 to 30 carbon atoms, and an aralkylene group having 7 to 30 carbon atoms; Z each independently represents an alkylene group having 1 to 20 carbon atoms and optionally having an ether bond; "n" represents an integer of 0 to 100; and "m" represents 1 or 2.

Such epoxy resin composition has poor compatibility between an organosiloxane moiety of the component (B) and the epoxy resin as the component (A), so that a sea-island structure is formed where the component (B) corresponds to the island and the component (A) corresponds to the sea. Since the component (B) contains a urethane group, partial crystallization occurs in the island component, thereby forming a highstrength siloxane-urethane polymer that cannot be achieved with siloxane alone. Furthermore, a urethane bond moiety and a terminal epoxide group of the component (B) have good affinity with the epoxy resin as the component (A), and therefore moderate compatibility is obtained at an interface between the island part and the sea part. Furthermore, since the component (B) as the constituent of the epoxy resin composition of the present invention has epoxide groups at both ends, the epoxy terminals thereof are also coupled to the epoxy resin as the component (A) via the component (C). Accordingly, in a state where the sea-island structure is formed, the island structure centered on the component (B) becomes an epoxy resin structure coupled to the component (A) as the sea structure. Therefore, as compared with a case without the component (B), the epoxy resin composition can increase both an elongation property and tensile shear strength.

Moreover, by setting "m" to 1 or 2 to reduce a molecular chain length of the general formula (1), an epoxy resin can be obtained with good dispersibility of the island structure to be formed, where the island component is not separated but united. The strength of the siloxane-urethane polymer can be further increased. Furthermore, by setting "m" to 1 or 2 to reduce the molecular chain length of the general formula (1), distance between both epoxy terminals of the component (B) is reduced, resulting in enhanced strength of the epoxy resin structure itself.

Further in the present invention, the polyorganosiloxane compound represented by the general formula (1) preferably has a number-average molecular weight of 500 to 100,000 in terms of standard polystyrene.

In such epoxy resin composition, a size of the structure constituting the island structure of the sea-island structure does not become too large, allowing formation of microphase separation. Additionally, by selecting the number-average molecular weight within this range, it is possible to control the size of the island structure.

Further in the present invention, the polyorganosiloxane compound represented by the general formula (1) preferably has an epoxy equivalent weight of 300 to 5,000 g/mol.

In such epoxy resin composition, a size of the structure constituting the island structure of the sea-island structure does not become too large, allowing formation of microphase separation. Additionally, by selecting the epoxy equivalent weight within this range, it is possible to control the size of the island structure.

Further in the present invention, the component (B) preferably contains hexamethylcyclotrisiloxane (D3), octamethylcyclotetrasiloxane (D4), decamethylcyclopentasiloxane (D5), and dodecamethylcyclohexasiloxane (D6) in a total amount of 3,000 ppm or less.

By reducing the amount of these low-molecular-weight cyclic siloxanes, it is possible to avoid a decrease in adhesion caused by the low-molecular-weight components bleeding out onto a surface of a cured material, contamination of surrounding environment caused by volatilization of the low-molecular-weight components, etc.

Further in the present invention, the component (A) is preferably a bisphenol epoxy resin.

Such epoxy resin composition enables to strength properties of various bisphenol epoxy resins to be selected for use, and enables to further increase both the elongation property and the tensile shear strength as compared with a case of using a bisphenol epoxy resin alone.

Further in the present invention, the component (C) is preferably an amine curing agent.

Such epoxy resin composition enables to obtain a favorable curing property.

Further in the present invention, the epoxy resin composition preferably further includes (D) a filler.

Such epoxy resin composition enables to reinforce mechanical strength.

Furthermore, the present invention provides an epoxy resin cured material that is a cured material of the epoxy resin composition described above.

Such epoxy resin cured material enables to further enhance the elongation and the tensile strength as compared with a conventional epoxy resin cured material, thereby toughening the cured material.

Furthermore, the present invention provides a one-component epoxy adhesive consisting of the epoxy resin composition described above.

Such one-component epoxy adhesive enables to stably provide desired properties, and requires no mixing in advance, resulting in increased workability.

Furthermore, the present invention provides a two-component epoxy adhesive consisting of a first liquid and a second liquid, wherein the first liquid contains the components (A) and (B) of the epoxy resin composition described above, and the second liquid contains the component (C) of the epoxy resin composition described above.

Furthermore, the present invention provides a two-component epoxy adhesive consisting of a first liquid and a second liquid, wherein the first liquid contains the component (A) of the epoxy resin composition described above, and the second liquid contains the components (B) and (C) of the epoxy resin composition described above.

Such two-component epoxy adhesive enables to ensure favorable storage stability, and stably exhibit its properties as the epoxy adhesive during use.

In this case, the component (B) is preferably a mixture of the polyorganosiloxane compound represented by the general formula (1) wherein "m" represents 1 and the polyorganosiloxane compound represented by the general formula (1) wherein "m" represents 2.

Such epoxy adhesive enables to optionally adjust an average degree of polymerization "m" between 1 and 2. As a result, it is possible to control a curing degree of the component (B).

### ADVANTAGEOUS EFFECTS OF INVENTION

When the epoxy resin composition of the present invention is used, poor compatibility between the organosiloxane moiety of the component (B) and the epoxy resin as the component (A) results in formation of a sea-island structure, where the component (B) corresponds to the island and the component (A) corresponds to the sea. Since the component (B) contains a urethane group, partial crystallization occurs in the island component, thereby forming a highstrength siloxane-urethane polymer that cannot be achieved with siloxane alone. Furthermore, needless to say, a urethane bond moiety and a terminal epoxide group of the component (B) have good affinity with the epoxy resin as the component (A), and therefore moderate compatibility is obtained at an interface between the island part and the sea part. Furthermore, since the component (B) as the constituent of the epoxy resin composition of the present invention has epoxide groups at both ends, the epoxy terminals thereof are also coupled to the epoxy resin as the component (A) via the component (C). Accordingly, in a state where the sea-island structure is formed, the island structure centered on the component (B) becomes an epoxy resin structure coupled to the component (A) as the sea structure. Therefore, as compared with a case without the component (B), the epoxy resin composition can increase both an elongation property and tensile shear strength.

Accordingly, by using the epoxy resin composition of the present invention, it is possible to further increase both an elongation property and tensile shear strength of a cured material, as compared with a case of a composition containing no polyorganosiloxane compound as the component (B).

The epoxy resin cured material of the present invention is a cured material of the above epoxy resin composition. As described above, it is possible to obtain a cured material with both the increased elongation property and tensile shear strength as compared with a conventional epoxy resin cured material.

The epoxy resin composition of the present invention that includes the components (A) to (C) can be made into a one-component epoxy adhesive. The one-component epoxy adhesive can be efficiently used with no need to mix it before use, as opposed to a two-component type. On the other hand, it is also possible to prepare a two-component adhesive consisting of a first liquid containing the component (A) and a second liquid containing the component (C), wherein the component (B) is contained either in the first liquid or the second liquid. This can significantly improve storage stability of the adhesive. In either case, it is possible to obtain a cured material with both the increased elongation property and tensile shear strength as compared with a conventional epoxy resin cured material.

### DESCRIPTION OF EMBODIMENTS

As described above, it has been demanded to develop an epoxy resin composition configured to exhibit a property of increasing both an elongation property and tensile shear strength, a cured material thereof, and an epoxy adhesive.

As a result of an intensive investigation on the above problems, the present inventors have found that both an elongation property and tensile shear strength can be increased by an epoxy resin composition including (A) an epoxy resin, (B) a polyorganosiloxane compound having a specific structure, and (C) an epoxy resin curing agent, the component (B) content being 1 to 40 parts by mass relative to 100 parts by mass of the component (A), and completed the present invention.

Thus, the present invention is an epoxy resin composition including (A) an epoxy resin containing two or more epoxide groups in one molecule, (B) a polyorganosiloxane compound represented by the following general formula (1), and (C) an epoxy resin curing agent, wherein the epoxy resin composition includes 1 to 40 parts by mass of the component (B) relative to 100 parts by mass of the component (A), 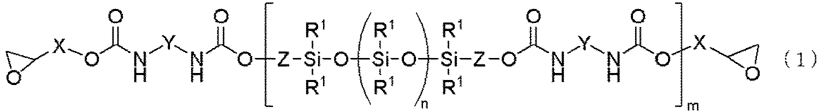 in the general formula (1), R¹ each independently represents a group selected from an alkyl group having 1 to 12 carbon atoms, an aryl group having 6 to 12 carbon atoms, and an aralkyl group having 7 to 12 carbon atoms or a hydroxy group; X each independently represents a divalent alkylene group having 1 to 10 carbon atoms; Y each independently represents a group selected from an alkylene group having 5 to 30 carbon atoms and optionally having an ether bond, an arylene group having 6 to 30 carbon atoms, and an aralkylene group having 7 to 30 carbon atoms; Z each independently represents an alkylene group having 1 to 20 carbon atoms and optionally having an ether bond; "n" represents an integer of 0 to 100; and "m" represents 1 or 2.

Hereinafter, the present invention will be described in detail. However, the present invention is not limited thereto.

### Epoxy Resin Composition

As a first embodiment of the present invention, an epoxy resin composition includes (A) an epoxy resin, (B) a polyorganosiloxane compound, and (C) an epoxy resin curing agent, wherein the epoxy resin composition includes 1 to 40 parts by mass of the component (B) relative to 100 parts by mass of the component (A). Additionally, other components such as (D) a filler may be included. Hereinafter, each component will be described in detail.

### (A) Epoxy Resin

Known epoxy resins except the component (B) described later can be used as (A) the epoxy resin containing two or more epoxide groups in one molecule in the epoxy resin composition of the present invention. Examples thereof include, but are not particularly limited to: bisphenol epoxy resins such as bisphenol A epoxy resins, bisphenol F epoxy resins, and bisphenol S epoxy resins; alicyclic epoxy resins such as dicyclopentadiene epoxy resins and 3,4-epoxycyclohexenylmethyl-3',4'-epoxycyclohexene carboxylate; multifunctional phenolic epoxy resins such as resorcinol epoxy resins; stilbene epoxy resins; triazine skeleton-containing epoxy resins; fluorene skeleton-containing epoxy resins; triphenolalkane epoxy resins; biphenyl epoxy resins; xylylene epoxy resins; biphenyl aralkyl epoxy resins; naphthalene epoxy resins; diglycidyl ether compounds of polycyclic aromatics such as anthracene; and the like. These can be used alone or in combination of two or more. Preferred are bisphenol epoxy resins.

Although an epoxy equivalent weight of the epoxy resin as the component (A) is not particularly limited, it is preferably 50 to 5,000 g/eq, more preferably 75 to 2,500 g/eq in terms of solid content from the viewpoints of pot life after mixing, strength of a cured material, etc.

Although properties of the epoxy resin as the component (A) are not particularly limited, the epoxy resin is preferably in a liquid state at 25°C and more preferably has a viscosity of 10 to 100,000 mPa·s, further preferably a viscosity of 20 to 50,000 mPa·s. Note that the viscosity is measured by a method using a B type viscometer described in JIS K 7117-1:1999.

### (B) Polyorganosiloxane Compound

The polyorganosiloxane compound as the component (B) in the epoxy resin composition of the present invention is a polyorganosiloxane compound represented by the following general formula (1).

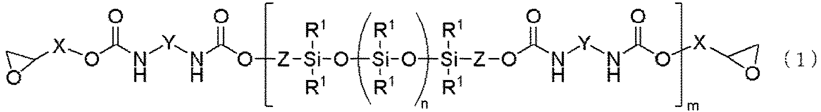

In the general formula (1), R¹ each independently represents a group selected from an alkyl group having 1 to 12 carbon atoms, an aryl group having 6 to 12 carbon atoms, and an aralkyl group having 7 to 12 carbon atoms or a hydroxy group; X each independently represents a divalent alkylene group having 1 to 10 carbon atoms; Y each independently represents a group selected from an alkylene group having 5 to 30 carbon atoms and optionally having an ether bond, an arylene group having 6 to 30 carbon atoms, and an aralkylene group having 7 to 30 carbon atoms; Z each independently represents an alkylene group having 1 to 20 carbon atoms and optionally having an ether bond; "n" represents an integer of 0 to 100; and "m" represents 1 or 2.

In the general formula (1), R¹ each independently represents a group selected from an alkyl group having 1 to 12 carbon atoms, preferably 1 to 8 carbon atoms, an aryl group having 6 to 12 carbon atoms, preferably 6 to 9 carbon atoms, and an aralkyl group having 7 to 12 carbon atoms, preferably 7 to 10 carbon atoms, or a hydroxy group. Specific examples thereof include: linear or branched alkyl groups such as a methyl group, an ethyl group, an n-propyl group, an isopropyl group, an n-butyl group, an isobutyl group, an s-butyl group, a t-butyl group, an n-pentyl group, an n-hexyl group, an n-heptyl group, an n-octyl group, a 2-ethylhexyl group, an n-nonyl group, and an n-decyl group; cycloalkyl groups such as a cyclohexyl group; aryl groups such as a phenyl group and a naphthyl group; aralkyl groups such as a benzyl group; and the like. Among them, a methyl group or a phenyl group is preferred.

In the general formula (1), X each independently represents a divalent alkylene group having 1 to 10 carbon atoms, preferably 1 to 8 carbon atoms.

Specific examples of the divalent alkylene group having 1 to 10 carbon atoms include a methylene group, an ethylene group, a propylene group, an n-hexylene group, an n-octylene group, and the like. Preferred is a methylene group.

In the general formula (1), Y each independently represents a group selected from an alkylene group having 5 to 30 carbon atoms, an arylene group having 6 to 30 carbon atoms, and an aralkylene group having 7 to 30 carbon atoms.

The alkylene group having 5 to 30 carbon atoms may be any of a linear, branched, or cyclic alkylene group. Specific examples thereof include linear or branched alkylene groups such as an n-pentylene group, an n-hexylene group, an n-heptylene group, an n-octylene group, a 2-ethylhexylene group, an n-decylene group, an n-undecylene group, an n-dodecylene group, an n-tridecylene group, an n-tetradecylene group, an n-pentadecylene group, an n-hexadecylene group, an n-heptadecylene group, an n-octadecylene group, an n-nonadecylene group, and an n-eicosanylene group.

Furthermore, the alkylene group optionally has one or more ether bonds somewhere in the molecular chain. Specifically, it is a group containing an ether bond, such as an ethyleneoxy group, a propyleneoxy group, and a butyleneoxy group, and may have a plurality of ether bonds.

The arylene group having 6 to 30 carbon atoms includes an o-phenylene group, a m-phenylene group, a p-phenylene group, a 3,5-tolylene group, a 2,4-tolylene group, a 2,6-tolylene group, a 1,2-naphthylene group, a 1,8-naphthylene group, a 2,3-naphthylene group, a 4,4'-biphenylene group, a 4,4'-methylenebisphenyl group, and the like.

The aralkylene group having 7 to 30 carbon atoms includes an o-xylylene group, a m-xylylene group, a p-xylylene group, a 1,3-phenylenebis(2-propyl) group, and the like.

Preferred examples of Y include the following groups. The dotted line indicates a bonding site with a nitrogen atom of a urethane bond in the general formula (1), where a hydrogen atom is omitted by convention.

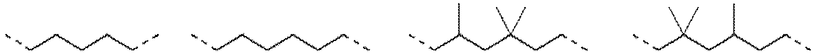

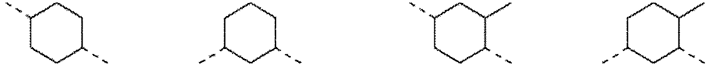

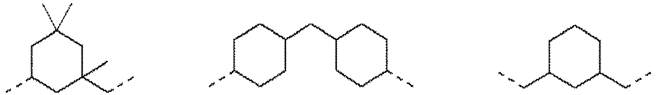

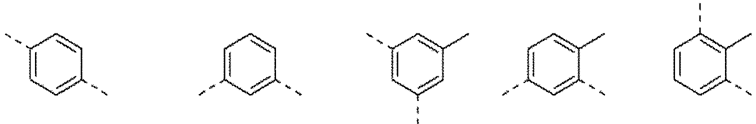

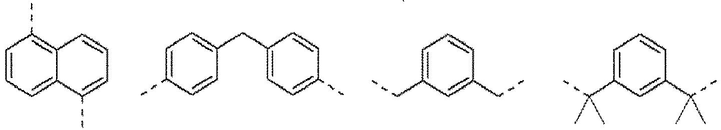

In the general formula (1), Z each independently represents an alkylene group having 1 to 20 carbon atoms, preferably 3 to 10 carbon atoms. Note that one or more ether bonds may be present in the alkylene chain having 1 to 20 carbon atoms. Preferred is a propylene group (-CH₂CH₂CH₂-) or an ethyleneoxypropylene group (*-CH₂CH₂OCH₂CH₂CH₂-). Note that "*" indicates a bond with an oxygen atom of the urethane bond in the general formula (1).

In the general formula (1), "n" represents an integer of 0 to 100. Preferably, "n" represents an integer of 0 to 60.

In the general formula (1), "m" represents an average degree of polymerization, and "m" represents 1 or 2, preferably 1. It is not preferable that "m" is 3 or greater, because a uniform cured material cannot be obtained.

The polyorganosiloxane compound represented by the general formula (1) in the present invention preferably has a number-average molecular weight of 500 to 100,000, more preferably 500 to 50,000, and further preferably 500 to 20,000. When the number-average molecular weight is within this range, the epoxide groups on both ends react with a curing agent, resulting in a molecular weight sufficient to obtain a cured material. Furthermore, a size of a structure constituting an island structure of a sea-island structure does not become too large, allowing formation of microphase separation. Furthermore, by selecting the number-average molecular weight within this range, it is possible to control the size of the island structure. Note that the number-average molecular weight shall refer to a number-average molecular weight in terms of standard polystyrene measured by gel permeation chromatography (GPC) under following measurement conditions.

### Measurement Conditions

Eluent: tetrahydrofuran (THF)
Flow rate: 0.6 mL/min
Detector: refractive index detector (RI)
Column: TSK Guardcolumn SuperH-H
TSKgel SuperHM-N (6.0 mmI.D. × 15 cm × 1)
TSKgel SuperH2500 (6.0 mmI.D. × 15 cm × 1)
(All available from Tosoh Corporation)
Column temperature: 40°C
Sample injection volume: 50 µL (THF solution with a concentration of 0.3% by mass)

In the present invention, the polyorganosiloxane compound represented by the general formula (1) preferably has an epoxy equivalent weight (g/mol) of 300 to 5,000 g/mol, more preferably 500 to 2,500 g/mol. When the epoxy equivalent weight is within this range, the epoxide groups on both ends react with a curing agent, resulting in a sufficient amount to obtain a cured material having favorable physical properties. Furthermore, a size of a structure constituting an island structure of a sea-island structure does not become too large, allowing formation of microphase separation. Furthermore, by selecting the epoxy equivalent weight within this range, it is possible to control the size of the island structure. Note that the epoxy equivalent weight (g/mol) in the present invention can be calculated by dissolving a sample of a predetermined mass in 1,4-dioxane, adding hydrochloric acid thereto, and performing back titration using an aqueous solution of sodium hydroxide.

It is preferable to reduce the amount of low-molecular-weight cyclic siloxanes, as described in WO 2016/111104 A1, etc., because various problems may occur. Usable as the component (B) is the one containing hexamethylcyclotrisiloxane (D3), octamethylcyclotetrasiloxane (D4), decamethylcyclopentasiloxane (D5), and dodecamethylcyclohexasiloxane (D6) preferably in a total amount of more than 0 ppm and 3,000 ppm or less, more preferably 0.1 to 2,000 ppm, and further preferably 0.1 to 1,000 ppm.

The amount of the low-molecular-weight cyclic siloxanes (D3-D6) is a value quantified by gas chromatography (GC) using a sample that is obtained by extracting and diluting the component (B) with an organic solvent. Additionally, regarding the phrase "more than 0 ppm", even a slight peak detected when quantified by the method is considered as "more than 0 ppm".

In the present invention, relative to 100 parts by mass of the component (A), the amount of the component (B) is 1 to 40 parts by mass, preferably 10 to 30 parts by mass, and more preferably 10 to 20 parts by mass. When the parts by mass value of the component (B) is more than 40 parts by mass, strength of the cured material of the epoxy resin is reduced and sufficient adhesion cannot be obtained. Furthermore, Tg is decreased and thus heat resistance is also reduced. On the other hand, when the amount is less than 1 part by mass, the desired effect of adding the component (B) is reduced.

Instead of the polyorganosiloxane compound as the component (B), an organosiloxane compound (B') with an organosiloxane moiety having a cyclic structure can also be used. This can further increase the strength of the cured material. Note that by adjusting proportions of the components (B) and (B'), it is possible to adjust the balance between elongation and strength.

### (C) Epoxy Resin Curing Agent

As (C) the epoxy resin curing agent in the epoxy resin composition of the present invention, known curing agents capable of reacting with an epoxy resin to cure the epoxy resin can be used. This curing agent is added to cause reaction between reactive functional groups (amino group, phenolic hydroxy group, acid anhydride group, mercapto group, etc.) in molecules of the curing agent and the epoxide groups in the components (A) and (B) to yield a cured material having a three-dimensional crosslinked structure.

Examples of the component (C) include amine curing agents, phenolic curing agents, acid anhydride curing agents, thiol curing agents, and the like.

Among these, amine curing agents are preferred. Generally commercially available products can be used as the amine curing agents. Examples thereof include aromatic polyamines, aliphatic polyamines, polyamideamines, polyetherpolyamines, and the like. Aromatic polyamines are further preferred.

Aromatic polyamines include compounds represented by the following general formulae (I) to (IV).

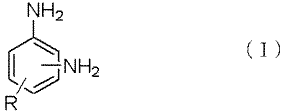

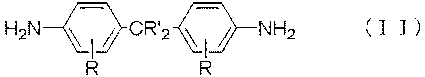

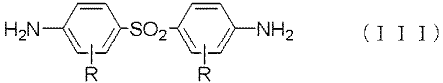

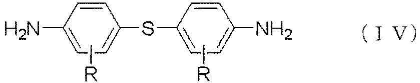

In the general formulae (I) to (IV), R each independently represents a hydrogen atom or a monovalent alkyl group having 1 to 6 carbon atoms; R' each independently represents a hydrogen atom, or a monovalent alkyl group having 1 to 12 carbon atoms, phenyl group, or amino phenyl group, where two R', taken together with a carbon atom to which they are attached, optionally form a ring structure.

Specific examples of aromatic polyamines include: aromatic diaminodiphenylmethane compounds such as 4,4'-diaminodiphenylmethane, 3,3'-diethyl-4,4'-diaminodiphenylmethane, 3,3',5,5'-tetramethyl-4,4'-diaminodiphenylmethane, and 3,3',5,5'-tetraethyl-4,4'-diaminodiphenylmethane; 2,4-diaminotoluene, 1,4-diaminobenzene, 1,3-diaminobenzene, and the like. These can be used alone or in combination of two or more.

### (D) Filler

The epoxy resin composition of the present invention may further include (D) a filler. Examples of the filler include: silicas such as fused silica, crystalline silica, and cristobalite; metal oxides such as aluminum oxide, titanium oxide, and magnesium oxide; and the like. These can be used alone or in combination of two or more. Among them, silicas are preferred from the viewpoints of easy availability and stability in quality.

An average particle size is preferably 0.1 to 50 µm, and can be selected depending on applications. Note that the average particle size refers to an average volume diameter measured by a laser diffraction method.

The above filler is preferably subjected to surface treatment in advance using a coupling agent such as a silane coupling agent. Note that a blending amount of the coupling agent to be used for the surface treatment and a surface treatment method are not particularly limited.

### Other Components

Other additives can be added to the epoxy resin composition of the present invention as necessary. Additives include reactive diluents, curing accelerators, flame retardants, ion trapping agents, antioxidants, adhesion aids, colorants, coupling agents, etc.

### Method for Producing Epoxy Resin Composition

As a method for producing the epoxy resin composition according to the present invention, for example, the epoxy resin composition can be obtained by mixing, stirring, dissolving, and dispersing the components (A), (B), and (C) simultaneously while heating them. Furthermore, the epoxy resin composition can be obtained by mixing, stirring, dissolving, and dispersing the component (A), (B), or (C) while heating them separately. Preferably, the epoxy resin composition in which the component (B) is well dispersed can be obtained by mixing, stirring, dissolving, and dispersing the components (B) and (C) while heating them, and thereafter adding the component (A) thereto.

Additionally, the component (D) and/or other additives may be added as necessary. In addition to the components (A), (B), and (C), they may be mixed, stirred, dissolved, and dispersed while being heated separately or simultaneously. Alternatively, the components (B) and (C) may be mixed, stirred, dissolved, and dispersed while being heated, and thereafter, the component (D) and/or other additives may be added simultaneously with the component (A).

### Epoxy Resin Cured Material

A second embodiment of the present invention is an epoxy resin cured material that is a cured material of the epoxy resin composition described above. By curing and molding it in a mold according to its application, it is possible to provide a highly tough cured material for various applications.

Curing conditions of the epoxy resin composition in the present invention are not particularly limited. For example, the epoxy resin composition may be heated at a temperature of 60 to 200°C, preferably 80 to 180°C, for 30 minutes to 10 hours, preferably 1 to 5 hours. Furthermore, in order to efficiently carry out the reaction, for example, heating may be performed in 2 to 5 steps from a low temperature to a high temperature for the above-mentioned period of time.

### Epoxy Adhesive

A third embodiment of the present invention is a one-component epoxy adhesive consisting of the epoxy resin composition described above. Note that when the component (C) has an amino group, it is preferable to mix the components such that a total valence of the epoxide groups in the components (A) and (B) is equivalent to a valence of the amino group in the component (C).

In this case, if (C) the epoxy resin curing agent that does not undergo curing reaction at ambient temperature is selected, it can be stored at ambient temperature. Furthermore, when (C) the epoxy resin curing agent that is cured at temperature from room temperature to 100°C, preferably curable at low temperature from room temperature to about 80°C is used, it may be stored at low temperature at which the reaction does not proceed.

A fourth embodiment of the present invention is a two-component epoxy adhesive consisting of a first liquid and a second liquid, wherein the first liquid contains the components (A) and (B) of the epoxy resin composition described above, and the second liquid contains the component (C) of the epoxy resin composition described above.

In this manner, it is possible to ensure favorable storage stability, and properties as an epoxy adhesive can stably be exhibited during use.

When the component (C) has an amino group, it is preferable to mix the components for use such that a total valence of the epoxide groups in the components (A) and (B) in the first liquid is equivalent to a valence of the amino group in the component (C) in the second liquid at the time of use. Practically, a tool such as a glue gun may be used, that is adjusted to injection allowing the valence of the epoxide groups to be equivalent to the valence of the amino group at the time of use.

A fifth embodiment of the present invention is a two-component epoxy adhesive consisting of a first liquid and a second liquid, wherein the first liquid contains the component (A) of the epoxy resin composition described above, and the second liquid contains the components (B) and (C) of the epoxy resin composition described above.

When the component (C) has an amino group, it is preferable to mix the first liquid and the second liquid at the time of use such that the mixture has a total valence of the epoxide groups in the components (A) and (B) equivalent to a valence of the amino group in the component (C) in the second liquid. Simultaneously, on this occasion, proportions of the components (B) and (C) in the second liquid may be adjusted such that the amount of the component (B) becomes 1 to 40 parts by mass relative to the component (A). That is, once the value of parts by mass of the component (B) relative to 100 parts by mass of the component (A) is determined as a proportion suitable for desired properties, the proportions of the components (B) and (C) in the second liquid is also determined.

In this manner, it is possible to ensure favorable storage stability, and properties as an epoxy adhesive can stably be exhibited during use. Practically, a tool such as a glue gun may be used, that is adjusted to injection allowing the valence of the epoxide groups to be equivalent to the valence of the amino group at the time of use.

In the above third to fifth embodiments, the component (B) is preferably a mixture of the polyorganosiloxane compound represented by the general formula (1) wherein "m" represents 1 and the polyorganosiloxane compound represented by the general formula (1) wherein "m" represents 2.

Such epoxy adhesive enables to optionally adjust an average degree of polymerization "m" between 1 and 2. As a result, it is possible to control a curing degree of the component (B).

### EXAMPLE

Hereinafter, the present invention will be specifically described with reference to Examples and Comparative Examples. However, the present invention is not limited thereto.

In Examples below, used as (A) the epoxy resin was a bisphenol A epoxy resin: jER828EL produced by Mitsubishi Chemical Group Corporation (epoxy equivalent weight: 186 g/mol) (hereinafter referred to as DGEBA), and
used as (C) the epoxy resin curing agent was an amine curing agent: 4,4'-diaminodiphenylmethane produced by Tokyo Chemical Industry Co., Ltd. (N-H equivalent: 49.6 g/mol)
(hereinafter referred to as DDM).

### Synthesis Example 1

A 500 mL separable flask was charged with 91.95 g (0.827 mol NCO) of isophorone diisocyanate. A mechanical stirrer, a stirring blade, a Dimroth condenser, a nitrogen gas inlet, and a thermometer were attached to the flask, and nitrogen gas was flowed. Next, 0.32 g (0.1% by mass) of K-KAT XK-640 as a catalyst (bismuth carboxylate produced by Kusumoto Chemicals, Ltd., 18% bismuth content) was added and the temperature was raised until the internal temperature reached 60°C. Using a 300 mL dropping funnel, 200.00 g (0.413 mol OH, NCO/OH=2.0) of 3-(2-hydroxyethoxy)propyldimethylsiloxy-terminated polydimethylsiloxane (n=8, OH value was 116 mg KOH/g) containing D3 of 64 ppm, D4 of 59 ppm, D5 of 23 ppm, and D6 of 226 ppm was added thereto over 30 minutes, and then matured at 70°C for 3 hours. Thereafter, 30.80 g (0.415 mol) of glycidol was added thereto and matured at 70°C for 2 hours, thereby obtaining 319.17 g of a colorless, slightly turbid, viscous liquid. Because of NCO/OH=2.0, "m" is 1.

The low-molecular-weight cyclic siloxanes were extracted with 10 mL of hexane containing tetradecane as an internal standard for 1 g of a sample, and measured by GC. As a result, the total amount of D3 to D6 was 305 ppm (D3: 54 ppm, D4: 52 ppm, D5: 16 ppm, and D6: 183 ppm).

### Synthesis Example 2

A 500 mL separable flask was charged with 70.15 g (0.631 mol NCO) of isophorone diisocyanate. A mechanical stirrer, a stirring blade, a Dimroth condenser, a nitrogen gas inlet, and a thermometer were attached to the flask, and nitrogen gas was flowed. Next, 0.25 g (0.1% by mass) of K-KAT XK-640 as a catalyst (bismuth carboxylate produced by Kusumoto Chemicals, Ltd., 18% bismuth content) was added and the temperature was raised until the internal temperature reached 60°C. Using a 300 mL dropping funnel, 200.00 g (0.413 mol OH, NCO/OH=1.5) of 3-(2-hydroxyethoxy)propyldimethylsiloxy-terminated polydimethylsiloxane (n=8, OH value was 116 mg KOH/g) containing D3 of 64 ppm, D4 of 59 ppm, D5 of 23 ppm, and D6 of 226 ppm was added thereto over 30 minutes, and then matured at 70°C for 3 hours. Thereafter, 15.72 g (0.212 mol) of glycidol was added thereto and matured at 70°C for 2 hours, thereby obtaining 277.05 g of a colorless, slightly turbid, viscous liquid. Because of NCO/OH=1.5, "m" is 2.

The low-molecular-weight cyclic siloxanes were extracted with 10 mL of hexane containing tetradecane as an internal standard for 1 g of a sample, and measured by GC. As a result, the total amount of D3 to D6 was 339 ppm (D3: 60 ppm, D4: 55 ppm, D5: 18 ppm, and D6: 206 ppm).

### Comparative Synthesis Example 1

A 500 mL separable flask was charged with 61.25 g (0.551 mol NCO) of isophorone diisocyanate. A mechanical stirrer, a stirring blade, a Dimroth condenser, a nitrogen gas inlet, and a thermometer were attached to the flask, and nitrogen gas was flowed. Next, 0.26 g (0.1% by mass) of K-KAT XK-640 as a catalyst (bismuth carboxylate produced by Kusumoto Chemicals, Ltd., 18% bismuth content) was added and the temperature was raised until the internal temperature reached 60°C. Using a 300 mL dropping funnel, 200.00 g (0.413 mol OH, NCO/OH=1.33) of 3-(2-hydroxyethoxy)propyldimethylsiloxy-terminated polydimethylsiloxane (n=8, OH value was 116 mg KOH/g) containing D3 of 64 ppm, D4 of 59 ppm, D5 of 23 ppm, and D6 of 226 ppm was added thereto over 30 minutes, and then matured at 70°C for 3 hours. Thereafter, 10.46 g (0.141 mol) of glycidol was added thereto and matured at 70°C for 2 hours, thereby obtaining 266.50 g of a colorless, slightly turbid, viscous liquid. Because of NCO/OH=1.33, "m" is 3.

The low-molecular-weight cyclic siloxanes were extracted with 10 mL of hexane containing tetradecane as an internal standard for 1 g of a sample, and measured by GC. As a result, the total amount of D3 to D6 was 305 ppm (D3: 62 ppm, D4: 58 ppm, D5: 18 ppm, and D6: 210 ppm).

### Examples 1-3

Defoamed DGEBA and the polyorganosiloxane compound of Synthesis Example 1 were placed in an aluminum cup and heated on a hot plate at 130°C to reduce viscosity. Next, DDM of a chemical equivalent was placed in another aluminum cup and completely melted while being stirred on a hot plate at the same temperature. This DDM was added to the aluminum cup containing the DGEBA and the polyorganosiloxane compound of Synthesis Example 1, and stirred for 5 minutes to produce a composition.

Thereafter, the above composition in the aluminum cup was heated and cured in three steps: at 120°C for 2 hours, at 150°C for 2 hours, and further at 180°C for 2 hours. Note that a temperature rise rate was 5°C/min. The blending amounts and physical properties of the cured material are shown in Table 1.

### Examples 4-5

The polyorganosiloxane compound of Synthesis Example 1, and separately heated and melted DDM of a chemical equivalent per total epoxide group content of epoxide group-containing compounds to be blended were added to an aluminum cup and stirred on a hot plate at 140°C for 15 minutes. Next, defoamed DGEBA was place in another aluminum cup and heated on a hot plate at 140°C to reduce viscosity. This DGEBA was added to the aluminum cup containing the polyorganosiloxane compound and the DDM, and heated and stirred for 2 minutes to produce a composition.

Thereafter, the above composition in the aluminum cup was heated and cured in a thermostatic bath in three steps: at 120°C for 2 hours, at 150°C for 2 hours, and at 180°C for 2 hours. Note that a temperature rise rate was 5°C/min. The blending amounts and physical properties of the cured material are shown in Table 1.

### Comparative Example 1

Defoamed DGEBA was placed in an aluminum cup and heated on a hot plate at 130°C to reduce viscosity. Next, DDM of a chemical equivalent was placed in another aluminum cup and completely melted while being stirred on a hot plate at 130°C. Then, the melted DDM was added to the aluminum cup containing the DGEBA and stirred for 5 minutes to produce a composition.

Thereafter, the above composition in the aluminum cup was heated and cured in a thermostatic bath in three steps: at 120°C for 2 hours, at 150°C for 2 hours, and at 180°C for 2 hours. Note that a temperature rise rate was 5°C/min. The blending amounts and physical properties of the cured material are shown in Table 1.

### Comparative Example 2

The polyorganosiloxane compound of Comparative Synthesis Example 1 and defoamed DGEBA were placed in an aluminum cup and heated on a hot plate at 130°C to reduce viscosity. Next, DDM of a chemical equivalent per total epoxide group content of epoxide group-containing compounds to be blended was placed in another aluminum cup and stirred on a hot plate at 130°C until it was completely melted. Then, DDM separately heated and melted was added to the aluminum cup containing the DGEBA and stirred for 5 minutes to produce a composition.

Thereafter, the above composition in the aluminum cup was heated and cured in a thermostatic bath in three steps: at 120°C for 2 hours, at 150°C for 2 hours, and at 180°C for 2 hours. Note that a temperature rise rate was 5°C/min.

As a result, in the cured material thus obtained, an island component of a sea-island structure was separated into a visually recognizable size, and a uniform cured material was not obtained. Therefore, further evaluation was not performed.

### Comparative Example 3

The polyorganosiloxane compound of Comparative Synthesis Example 1, and separately melted DDM of a chemical equivalent per total epoxide group content of epoxide group-containing compounds to be blended were placed in an aluminum cup and stirred on a hot plate at 140°C for 15 minutes. Next, defoamed DGEBA was placed in another aluminum cup and heated on a hot plate at 140°C to reduce viscosity. This DGEBA was placed in an aluminum cup containing the polyorganosiloxane compound of Comparative Synthesis Example 1 and the DDM that was separately heated and melted, and heated and stirred for 2 minutes to produce a composition.

Thereafter, the above composition in the aluminum cup was heated and cured in a thermostatic bath in three steps: at 120°C for 2 hours, at 150°C for 2 hours, and at 180°C for 2 hours. Note that a temperature rise rate was 5°C/min.

As a result, in the cured material thus obtained, an island component of a sea-island structure was separated into a visually recognizable size, and a uniform cured material was not obtained. Therefore, further evaluation was not performed.

### Dynamic Viscoelasticity Measurement

The cured materials of Examples 1-5 and Comparative Example 1 were cut into a test piece size (length: 30 mm × width: 4.0 mm × thickness: 0.40 mm), and measured using a Rheogel-E40000 produced by UBM under the following conditions: temperature range of -150 to 250°C, sine wave, temperature rise rate of 2.5°C/min, tensile mode, and frequency of 10 Hz. For the obtained results, a peak top of loss tangent (tanδ), i.e., loss modulus (G")/storage modulus (G'), was taken as Tg.

### Tensile Shear Adhesion Test

A mild steel plate was immersed in acetone and ultrasonically cleaned for 30 minutes. Next, the mild steel plate was polished with an electric sander equipped with a #240 abrasive paper to remove an oxide film on the surface thereof, and then immersed in acetone and ultrasonically cleaned for 30 minutes twice. Thereafter, a backing plate (length: 25 mm × width: 25 mm × thickness: 1.6 mm) was attached to a portion 62.5 mm from the end of the mild steel plate. Then, the composition prepared in each Example was applied to the mild steel plate up to 12.5 mm from the end thereof, another mild steel plate was superimposed on it and heated at 120°C for 2 hours at 5 MPa using a hot press. Thereafter, a weight (weight: 1700 g, pressure: 960 Pa) was placed on the test piece in a thermostatic bath, heated at 150°C for 2 hours, and then further heated at 180°C for 2 hours to prepare the test piece. Note that a temperature rise rate was 5°C/min. After slow cooling, the test piece was taken out and any resin protruding from the joint was removed by a cutter knife.

The test piece thus obtained was subjected to a tensile shear adhesion test using AGS-X produced by Shimadzu Corporation at a head speed of 50 mm/min. For rupture strength and breaking elongation, an average value of measurements (N=5) was taken. Fracture morphology was confirmed visually.

Evaluation results of Examples 1-5 and Comparative Example 1 are shown in Table 1.

**[Table 1]**

| | Example 1 | Example 2 | Example 3 | Example 4 | Example 5 | Comparative Example 1 |
|---|---|---|---|---|---|---|
| DGEBA (g) | 1.50 | 1.50 | 1.50 | 1.50 | 1.50 | 1.50 |
| Synthesis example 1 (g) | 0.15 | 0.30 | 0.45 | 0.15 | 0.30 | - |
| DDM (g) | 0.41 | 0.42 | 0.43 | 0.41 | 0.42 | 0.40 |
| Composition appearance | White turbid | White turbid | White turbid | White turbid | White turbid | Colorless transparent |
| Appearance after curing | Brown Opaque | Brown Opaque | Brown Opaque | Brown Opaque | Brown Opaque | Yellow Transparent |
| Tg (°C) | 148 | 170 | - | 154 | 180 | 184 |
| Tensile shear strength (MPa) | 12.6 | 14.8 | 11.9 | 13.4 | 13.1 | 11.4 |
| Breaking elongation (%) | 8.6 | 9.4 | 10.7 | 13.9 | 12.0 | 7.1 |

In all of Examples 1-5, strength and elongation were increased in the tensile shear adhesion test as opposed to Comparative Example 1 containing no component (B), and the effects of the present invention were confirmed.

The present description includes the following embodiments.
[1]: An epoxy resin composition comprising (A) an epoxy resin comprising two or more epoxide groups in one molecule, (B) a polyorganosiloxane compound represented by the following general formula (1), and (C) an epoxy resin curing agent, wherein the epoxy resin composition comprises 1 to 40 parts by mass of the component (B) relative to 100 parts by mass of the component (A), 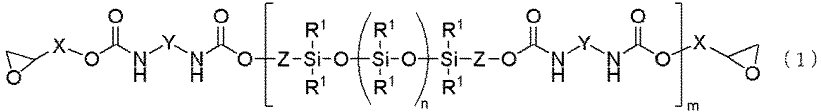 in the general formula (1), R¹ each independently represents a group selected from an alkyl group having 1 to 12 carbon atoms, an aryl group having 6 to 12 carbon atoms, and an aralkyl group having 7 to 12 carbon atoms or a hydroxy group; X each independently represents a divalent alkylene group having 1 to 10 carbon atoms; Y each independently represents a group selected from an alkylene group having 5 to 30 carbon atoms and optionally having an ether bond, an arylene group having 6 to 30 carbon atoms, and an aralkylene group having 7 to 30 carbon atoms; Z each independently represents an alkylene group having 1 to 20 carbon atoms and optionally having an ether bond; "n" represents an integer of 0 to 100; and "m" represents 1 or 2.
[2]: The epoxy resin composition according to the above [1], wherein the polyorganosiloxane compound represented by the general formula (1) has a number-average molecular weight of 500 to 100,000 in terms of standard polystyrene.
[3]: The epoxy resin composition according to the above [1] or [2], wherein the polyorganosiloxane compound represented by the general formula (1) has an epoxy equivalent weight of 300 to 5,000 g/mol.
[4]: The epoxy resin composition according to the above [1], [2] or [3], wherein the component (B) comprises hexamethylcyclotrisiloxane (D3), octamethylcyclotetrasiloxane (D4), decamethylcyclopentasiloxane (D5), and dodecamethylcyclohexasiloxane (D6) in a total amount of 3,000 ppm or less.
[5]: The epoxy resin composition according to the above [1], [2], [3] or [4], wherein the component (A) is a bisphenol epoxy resin.
[6]: The epoxy resin composition according to the above [1], [2], [3], [4] or [5], wherein the component (C) is an amine curing agent.
[7]: The epoxy resin composition according to the above [1], [2], [3], [4], [5] or [6], further comprising (D) a filler.
[8]: An epoxy resin cured material that is a cured material of the epoxy resin composition according to the above [1], [2], [3], [4], [5], [6] or [7].
[9]: A one-component epoxy adhesive consisting of the epoxy resin composition according to the above [1], [2], [3], [4], [5], [6] or [7].
[10]: A two-component epoxy adhesive consisting of a first liquid and a second liquid, wherein the first liquid comprises the components (A) and (B) of the epoxy resin composition according to the above [1], [2], [3], [4], [5], [6] or [7], and the second liquid comprises the component (C) of the epoxy resin composition according to the above [1], [2], [3], [4], [5], [6] or [7].
[11]: A two-component epoxy adhesive consisting of a first liquid and a second liquid, wherein the first liquid comprises the component (A) of the epoxy resin composition according to the above [1], [2], [3], [4], [5], [6] or [7], and the second liquid comprises the components (B) and (C) of the epoxy resin composition according to the above [1], [2], [3], [4], [5], [6] or [7].
[12]: The epoxy adhesive according to the above [9], [10] or [11], wherein the component (B) is a mixture of the polyorganosiloxane compound represented by the general formula (1) wherein "m" represents 1 and the polyorganosiloxane compound represented by the general formula (1) wherein "m" represents 2.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. An epoxy resin composition comprising (A) an epoxy resin comprising two or more epoxide groups in one molecule, (B) a polyorganosiloxane compound represented by the following general formula (1), and (C) an epoxy resin curing agent, wherein the epoxy resin composition comprises 1 to 40 parts by mass of the component (B) relative to 100 parts by mass of the component (A), 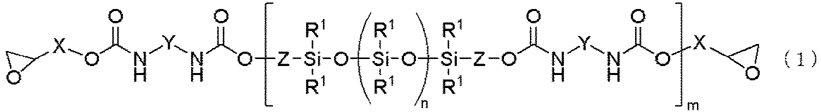 in the general formula (1), R¹ each independently represents a group selected from an alkyl group having 1 to 12 carbon atoms, an aryl group having 6 to 12 carbon atoms, and an aralkyl group having 7 to 12 carbon atoms or a hydroxy group; X each independently represents a divalent alkylene group having 1 to 10 carbon atoms; Y each independently represents a group selected from an alkylene group having 5 to 30 carbon atoms and optionally having an ether bond, an arylene group having 6 to 30 carbon atoms, and an aralkylene group having 7 to 30 carbon atoms; Z each independently represents an alkylene group having 1 to 20 carbon atoms and optionally having an ether bond; "n" represents an integer of 0 to 100; and "m" represents 1 or 2.

2. The epoxy resin composition according to claim 1, wherein the polyorganosiloxane compound represented by the general formula (1) has a number-average molecular weight of 500 to 100,000 in terms of standard polystyrene.

3. The epoxy resin composition according to claim 1, wherein the polyorganosiloxane compound represented by the general formula (1) has an epoxy equivalent weight of 300 to 5,000 g/mol.

4. The epoxy resin composition according to claim 1, wherein the component (B) comprises hexamethylcyclotrisiloxane (D3), octamethylcyclotetrasiloxane (D4), decamethylcyclopentasiloxane (D5), and dodecamethylcyclohexasiloxane (D6) in a total amount of 3,000 ppm or less.

5. The epoxy resin composition according to claim 1, wherein the component (A) is a bisphenol epoxy resin.

6. The epoxy resin composition according to claim 1, wherein the component (C) is an amine curing agent.

7. The epoxy resin composition according to claim 1, further comprising (D) a filler.

8. An epoxy resin cured material that is a cured material of the epoxy resin composition according to any one of claims 1 to 7.

9. A one-component epoxy adhesive consisting of the epoxy resin composition according to claim 1.

10. A two-component epoxy adhesive consisting of a first liquid and a second liquid, wherein the first liquid comprises the components (A) and (B) of the epoxy resin composition according to claim 1, and the second liquid comprises the component (C) of the epoxy resin composition according to claim 1.

11. A two-component epoxy adhesive consisting of a first liquid and a second liquid, wherein the first liquid comprises the component (A) of the epoxy resin composition according to claim 1, and the second liquid comprises the components (B) and (C) of the epoxy resin composition according to claim 1.

12. The epoxy adhesive according to any one of claims 9 to 11, wherein the component (B) is a mixture of the polyorganosiloxane compound represented by the general formula (1) wherein "m" represents 1 and the polyorganosiloxane compound represented by the general formula (1) wherein "m" represents 2.
